# EUROPEAN PATENT APPLICATION

(11) **EP 0 921 478 A2**
(43) Date of publication of application: **09.06.1999**
(21) Application number: 98309363.4
(22) Date of filing: 16.11.1998
(51) Int. Cl.: G06F 17/22

(54) **Transformation of marked up documents**

(30) Priority: 05.12.1997 CA 223953
(71) Applicant: NORTHERN TELECOM LIMITED, Montreal, Quebec H2Y 3Y4 (CA)
(72) Inventor: Gajraj, Colin, Ottawa, Ontario, K1R 7S7 (CA)
(74) Representative: Bewley, Ewan Stuart

(57) **Abstract**

A tool for transforming SGML documents using SGML architectures determines to what class of element an element in a first document belongs, from the first document type definition, by searching at least part of the first document type definition for a qualifier to an element, indicating an association with a definition of the class of element. It then determines for that class, at least one corresponding element in the second document type definition, and includes in the second document, an instance of the corresponding element or elements. Interchange of documents becomes easier because a single generic tool can be used for transformation between many different types of documents.

## Description

### Background to the invention

### Field of the invention

The invention relates to methods of transforming a document, to methods of populating a transformation table for transforming elements of a first document, to methods of using transformation tables for transforming an element of a first document to apparatus and to software for such methods.

### Background art

It is known to have documents containing e.g. text and images represented in a form comprising content (also called data) and markup. The markup indicates how the content is to be processed by an application. A well known example of a language specifying how content may be marked up, is HTML, (hypertext markup language). HTML is an example of a document type definition (DTD). Many others are known. A generic standard for such DTDs is called Standard Generalised Markup Language ( SGML). As other standards may be conceived for DTDs, references herein to DTDs are not intended to be limited to SGML DTDs.

Generally, a marked up document comprises a group of elements of content linked in some predefined structure, with markup provided to delimit and identify the elements. The SGML standard does not say much about how a document should be processed by an application. An SGML document, then, can be processed in multiple ways by multiple applications. For example, a print application may decide to print each graphic in a document inline, while a display application may decide to offer the user hypertext links to graphics rather than displaying them inline. The DTD defines what types of elements e.g. titles, chapters paragraphs, images, are allowed, and the order in which these elements should occur.

By ensuring documents conform to a given DTD, interchangeability across different applications could be ensured. Even if new DTDs were created to deal with particular requirements, while they remained within the SGML standard, some interchangeability could still be ensured. The SGML standard ensures that a reference to the DTD holding the root element type (and all of its children), is contained in the header of each document so that a parser knows where to find the appropriate document type definition which it will need to interpret the elements.

Currently SGML is the only really viable way for capturing information in a high-valued, structured fashion in a large and diverse organisation. However many groups within organisations do not yet use SGML to encode their information. It is known to provide filters for converting documents created using common word processing programs such as Word, into SGML. Also, it is known to provide software capable of automatically creating HTML documents from SGML documents. Predetermined rules specific to each element, are applied for each element in the SGML document, to generate elements for the new HTML document. However, one limitation with DTDs is that each provides a syntax that caters for a specific domain or set of applications. Across large and diverse organisations, widely differing DTDs may be preferred to suit particular applications. For ensuring interchangeability, various solutions are known.
1. a "mother-of-all-DTDs" DTD to be used by all departments in the organization;
2. a set of "common elements", mainly leaf-node type elements (paragraphs, lists, headings, etc.), which would at least allow for some degree of interchange.

However, the first solution will be insufficient for a large corporation: such a DTD would not meet the specific information needs of various departments, causing these departments to become either reluctant to use SGML, or else to craft their own DTD, requiring some sort of transformation to occur between their DTD and the "mother-of-all-DTDs" DTD, which then would become an interchange DTD. An interchange DTD provides a partial solution, but means that tools must now be crafted for each department in order to facilitate interchange.

The second solution would be insufficient insofar as only lower-level information types are interchangeable. This solution also mandates that departments use element types defined centrally, restricting those departments wanting to use their own element types from doing so. This results in a situation similar to that described in the previous scenario, that is, the creation of interchange tools for each department wanting to deviate from the prescribed element types. Again, in a large or diverse institution this would make tool development and tool maintenance very complex. In summary, the various known types of broad, lowest common denominator DTDs, which could be used as a root by all in the organisation result in an unsatisfactory compromise between centralised control, and individual flexibility.

Accordingly, SGML architectures have been conceived to give better control of the document structure necessary for interchange of information, without unnecessary constraints. They involve grouping elements of DTDs in classes, in a hierarchical structure. Elements of the same class are identified by a qualifier in the form of an attribute, indicating the identity or address of a higher level element defining the class. The class definition element may itself be in a group of similar elements defined by a higher level element, and so on. A class definition element is also termed a base architectural form, and may be grouped with others to form a meta-DTD.

Thus problems of modularity, consistency and reusability can be addressed in similar fashion to object oriented design owing to inheritance of structure and function of one class by another. However, in practice, where individual applications are tailored to using particular DTDs, the information interchange improvements enabled by SGML architectures will still be inadequate.

The invention seeks to obviate the aforementioned problems.

### Summary of the Invention

According to a first aspect of the invention there is provided a method of transforming a first document marked up according to a first document type definition, into a second document marked up according to a second document type definition, the first document comprising at least one element, and containing a reference to the first document type definition, the method comprising the steps of:
a) determining to what class of element an element in the first document belongs, from the first document type definition;
b) determining for that class, at least one corresponding element in the second document type definition; and
c) including in the second document, an instance of the corresponding element or elements. An advantage of this is that it enables better reuse of information because it can make it easier to interchange documents. It is easier because a single generic tool can be used for transformation between many different types of documents. It is particularly useful in environments where many and varied types of DTD are in use, or where applications are tailored to use particular DTDs.

Preferably, the method further comprises the step d) of repeating steps a), b) and c) for all of the elements in the first document.

Preferably, the method further comprises the step of validating the second document to determine if it conforms to the second document type definition. An advantage of this is that it can save a user from having to invoke a separate validation process. Also, if the output is found invalid, it may help the user determine whether the transformation can feasibly produce a valid output.

Preferably, step b) further comprises the step of selecting from multiple corresponding elements according to user input. An advantage of this is that it enables the tool to handle exceptions or ambiguities efficiently.

Preferably, the user input comprises a stored record of a previous selection made by a user in response to a similar choice. An advantage of this is that it enables subsequent transformations to be handled with less user interaction.

Preferably, the DTDs use a Standard Generalised Markup Language definition. This is a well known and heavily used standard, to which many existing documents adhere, so it will be particularly useful to be able to transform documents between DTDs both conforming to the standard.

Preferably, the step of determining to what class of element each of the elements in the first document belongs, comprises searching at least part of the first document type definition for a qualifier to an element, indicating an association with a definition of the class of element.

Preferably, the correspondence comprises a single mapping table, relating each of the elements in the first document, to elements in the second document type definition. An advantage of a direct correspondence is speed of processing.

Preferably, the correspondence comprises a pair of mapping tables, a first relating each of the elements in the first document, to one or more classes of element, and a second relating each of the classes to one or more elements in the second document type definition. An advantage of a pair of mapping tables is that it can aid the automation of the mapping process.

Preferably, step b) further comprises the step of selecting between multiple corresponding elements according to which has a more direct class based correspondence. An advantage of automating the decision making where possible is the speed and efficiency gains which can be made if user input can be reduced.

Preferably, the first and second document type definitions further comprise element qualifiers, the first document further comprises element qualifiers, and the method further comprises the step of determining for each of the qualifiers of the first document a corresponding qualifier from those in the second document type definition. An advantage of transforming qualifiers such as attributes or notations, is that they can be critical for particular applications and documents, so the breadth of use for the transformation can be increased.

Preferably the qualifier comprises an attribute, for describing a property of the element.

According to another aspect of the invention, there is provided apparatus for the above methods.

According to another aspect of the invention, there is provided software for the above methods.

According to another aspect of the invention, there is provided a method of populating a transformation table for transforming elements of a first document marked up according to a first document type definition, into elements of a second document type definition, the first document comprising at least one element, and containing a reference to the first document type definition, the method comprising the steps of:
determining to what class of element an element in the first document belongs from the first document type definition;
determining for that class, at least one corresponding element in the second document type definition; and
populating the table with the corresponding element or elements. An advantage of this is that it enables knowledge of how to transform the documents to be built up in a form which is easy to use in subsequent transformation operations.

According to another aspect of the invention, there is provided a method of using transformation tables for transforming an element of a first document marked up according to a first document type definition, into an element of a second document marked up according to a second document type definition, the tables comprising correspondences between elements in more than two document type definitions, the method comprising the steps of:
selecting a table having a correspondence between the elements in the first document and elements in the second document type definition; and
using an element of the first document to access an entry in the selected table to perform the transformation. An advantage arising here is that the amount of interactive user input required for the transformation can be reduced.

Any of the preferred features may be combined, and combined with any aspect of the invention, as would be apparent to a person skilled in the art.

To show, by way of example, how to put the invention into practice, embodiments will now be described in more detail, with reference to the accompanying drawings.

### Brief Description of Drawings

Figure 1 shows a general model of a hierarchy;
Figure 2 shows an example of an SGML architectural hierarchy for a "list " element;
Figure 3 shows in schematic form the basic steps of an embodiment of the invention;
Figure 4 shows in more details of the steps used by a transformation tool according to an embodiment of the invention;
Figure 5 shows in more detail the step 180 of figure 4, of finding all elements in DTD A, DTD B and their corresponding architectural forms;
Figure 6 shows a pair of mapping tables obtained from the process of figure 5;
Figure 7 shows the step 230 of figure 4 in more detail;
Figure 8 shows an architectural hierarchy having a unique, direct, single inheritance mapping;
Figure 9 shows an architectural hierarchy having a non unique, direct, single inheritance mapping;
Figure 10 shows an architectural hierarchy having a unique, indirect, single inheritance mapping;
Figure 11 shows an architectural hierarchy having a unique, direct, multiple inheritance mapping;
Figure 12 shows an architectural hierarchy having a non unique, direct, multiple inheritance mapping;
Figure 13 shows an architectural hierarchy having another non unique, direct, multiple inheritance mapping;
Figure 14 shows an architectural hierarchy having a non unique, indirect, multiple inheritance mapping;
Figure 15 shows a pair of mapping tables resulting from a multiple inheritance mapping;
Figure 16 shows more details of the steps used by a transformation tool according to another embodiment of the invention; and
Figure 17 shows in schematic form an overview of an implementation of the invention.

### Detailed Description

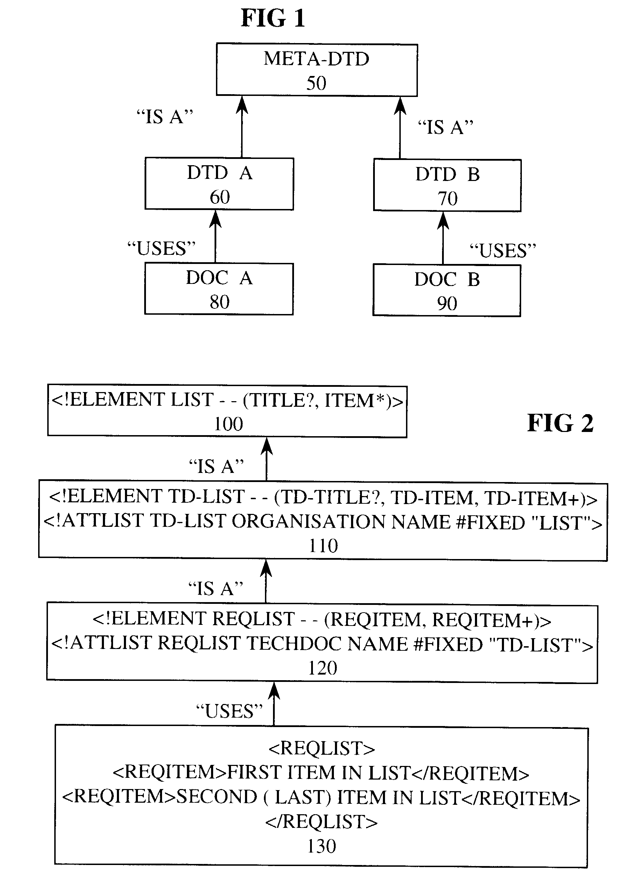

### Figures 1, 2 - Description of Classes or Architectures

SGML architectures grew out of HyTime (ISO/IEC 10744), and can be described as a way of overlaying some object-oriented concepts onto SGML. Using architectures, one is able to describe meta-DTDs, or superclass DTDs, from which SGML instances can be derived. Thus we can create object-oriented superclass-subclass information hierarchies in this fashion, that flexibly mirror a corporation's information types. Architectures differ from the traditional DTD building methods mentioned above insofar as subclass-DTDs (client DTDs) reflecting new information types can be created as needed, and do not have to be predefined (or set in stone) as in the above methods. In a meta-DTD, one defines various architectural forms, which are element and attribute prototypes (or classes) from which other elements and attributes can be derived. A general model is shown in figure 1. A meta-DTD 50 is shown, which is a base class for DTDs A and B, 60, 70. Document instance A, 80, is of the type defined in DTD A. Document instance B, 90, is of the type defined in DTD B.

An example of an element architectural form, say defined in an organisation's base class DTD, is illustrated in figure 2.
<!ELEMENT list - - (title?, item*)>
defines a "list" element 100, as consisting of an optional "title" followed by 0 or more "item" elements. A list element 110 used for technical documentation derived from the above form could be as follows:
<!ELEMENT TD-list - - (TD-title?, TD-item, TD-item+)>
<!ATTLIST TD-list Organisation NAME #FIXED "list">
which specializes the original list element to be restricted to 2 or more items. Note that "TD-list" has an attribute called "Organisation" with the value "list". This attribute, the architecture naming attribute, is the means for indicating that "TD-list" is-a (type of) "list". Note also that "TD-list" is said to conform to "list" (provided "TD-title" also derives from "title" and "TD-item" also derives from "item") since the content models are consistent (i.e. the content model of "TD-list" does not violate the rules of "list" since "TD-list" consists of 2 or more items). A content model is the set of rules that define what an element's contents are: its sub-elements, and the order in which these occur.

The specialization of the list element can be continued, say for requirements documents in the technical documentation world for example as follows:
<!ELEMENT ReqList - - (Reqltem, Reqltem+)>
<!ATTLIST ReqList TechDoc NAME #FIXED "TD-list">
which defines a requirements list 120 consisting of 2 or more requirements items. Again, note that "ReqList" has an attribute called "TechDoc" with the value "TD-list". This is analogous to the "Organisation" attribute attached to the TD-list element, and is the means for indicating that "ReqList" is-a "TD-list". Note also that "ReqList" conforms to "TD-list" (provided "ReqItem" also derives from "TD-item") since the content models are consistent (since "title" is optional and "ReqList" consists of 2 items). It is in this way that hierarchies of architectures can be created, specializing definitions to suit the requirements of specific documentation types.

An advantage of this systematic method for deriving DTDs is that processing applications that operate on the base architecture can be designed to also operate correctly on derivative content models, even ones that have not yet been defined. This simplifies the conversion and interchange of document instances that conform to the architecture.

An instance of an element 130 in a document conforming to the DTD element ReqList, could be as follows:
<REQLIST>
<REQITEM>First item in list</REQITEM>
<REQITEM>Second (last) item in list</REQITEM>
</REQLIST>

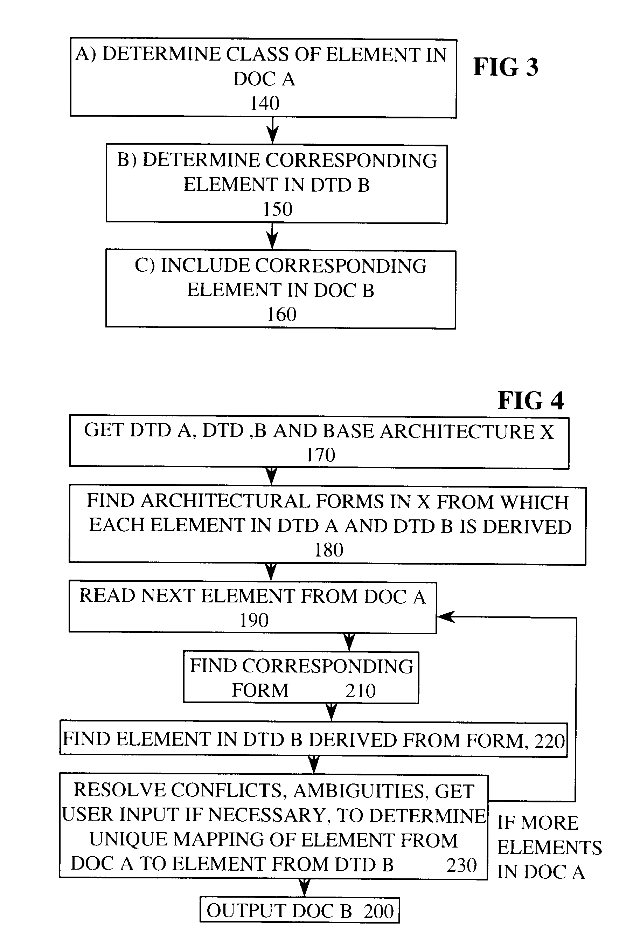

### Figures 3, 4 - Transformation Tool

The purpose of this tool is to aid in providing automated SGML transformations between documents of different DTDs. As shown in figure 3, the basic steps are as follows:
a) determining, at step 140, to what class of element an element in the first document belongs, from the first document type definition;
b) determining at step 150 for that class, at least one corresponding element in the second document type definition; and
c) at step 160, including in the second document, an instance of the corresponding element or elements.

One practical implementation for the tool for SGML architectures is described as follows, with reference to figure 4 where "docA" is a document conforming to DTD "A" being transformed to a document conforming to DTD "B", and where there is no multiple inheritance, i.e., each element in DocA is derived from a single base architecture.
a1. Get input DTD (A), output DTD (B), and base architecture (X) at step 170.
a2. Find all elements in DTD A, and their corresponding architectural forms;
   find all elements in DTD B, and their corresponding architectural forms, at step 180.
b1. Read docA element, at 190.
b2. Find corresponding "B" element(s), at 210, 220 using information gathered in step a2.
b3. If more than 1 match, request best fit from user at 230.
c1. At 230, map docA element to corresponding element in DTD B, then go back to step b1, unless there are no more elements in DocA.
c2. Output the transformed DocB, at 200.

One of the benefits of such a tool derives from the fact that only one tool is needed to cater for the needs of 'n' transformations (if this tool did not exist, then 'n' transformation tools would need to be written). The documents participating in the transformations must all conform to common SGML architectures. Not all transformations will be fully automatic; the level of automation depends on the level to which the documents participating in the transformation have elements whose content models match.

### Step a1

The input DTD (A), output DTD (B), and the base architecture(X), or references to their locations, should be input from the user, who is attempting to transform documents conforming to DTD A to documents conforming to DTD B, where DTDs A and B conform to common base architectures. It may be preferable to perform a validation to validate that the input document does in fact conform to DTD A, before starting the transformation.

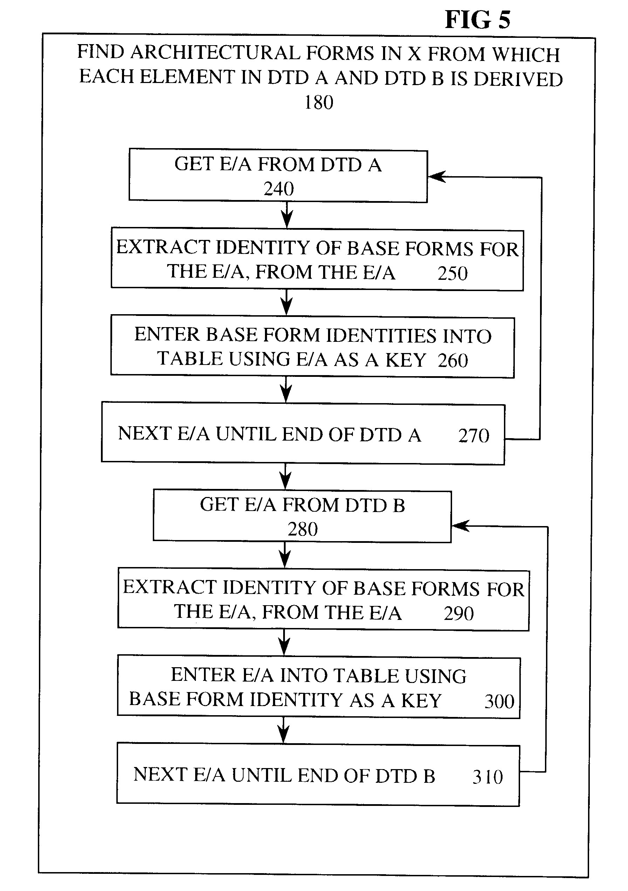

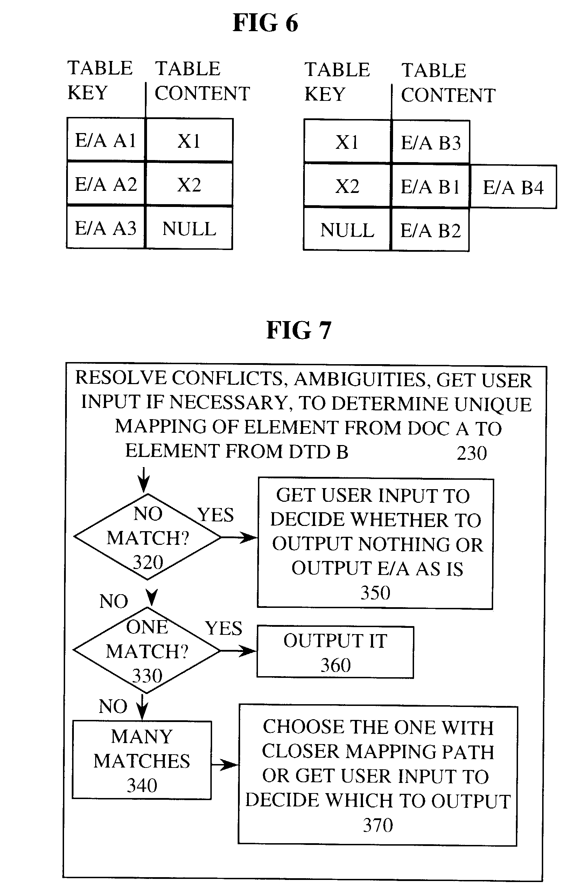

### Figures 5, 6 Step a2 - Finding Architectural Forms

This is concerned with finding all elements/attributes (E/A) in DTD A, and their corresponding architectural forms; and all E/A in DTD B, and their corresponding architectural forms. In the same way as elements can be derived from element architectural forms, attributes can derived from attribute architectural forms. The tool should cater for transforming both elements and attributes.

As shown in figure 5, at step 240, an E/A is read from DTD A. Identity of base forms is extracted at 250 from the E/A. At 270, the base forms are entered into an array or table as shown in figure 6, using the E/As as a key. At 270, the process is repeated until all E/As in DTD A have been processed.

A slightly different process occurs for DTD B, as follows. an E/A is read from DTD B at 280. Identity of base forms is extracted at 290 from the E/A. At 300, the E/As are entered into an array or table as shown in figure 6, using the base forms as a key. At 310, the process is repeated until all E/As in DTD B have been processed.

It could be implemented by building an SP (standing for SGML Parser, a widely available tool made up of a set of C++ libraries for processing SGML documents,) application, i.e. code that would modify SP libraries to query DTDs A and B to extract the relevant information. This application would need to have access to the input and target DTDs ("A" and "B"), and all meta-DTDs ("X") holding architectural forms from which E/A in "A" and "B" are derived.

Data structures would have to be built for E/A in DTD A and E/A in DTD B. An example of these data structures as shown in figure 6 could be a pair of associative arrays or tables. They could be combined into a single array or table. The first associative array(s) is for DTD A, with keys being all E/A in DTD A. These are shown as A1, A2, and A3. Array contents are the architectural forms from which E/A in DTD A were derived, shown as X1 and X2, or NULL, indicating no derivation for particular E/A. The second associative array(s) is for DTD B, with keys being architectural forms from which E/A in DTD B were derived, X1, X2, or NULL, indicating no derivation for E/A. Array contents are all E/A in DTD B, shown as B1, B2, B3 and B4. As B1 and B4 are shown in the same row of the table, the mapping is not unique, and the ambiguity would need to be resolved, if necessary by user input.

Transformation of SGML notation and data attributes could also be addressed by the tool, according to the needs of a particular embodiment.

### Steps b1, b2

As shown at step 190, a next element/attribute(s) is read from Doc A. If no more elements, are found in Doc A, the process is exited at step 200. Otherwise, the next step is to find corresponding element(s), in DTD B using information gathered in step a2. If more than 1 match, a best fit may be requested from the user.

### Figure 7, Steps b3, c1 - Map docA element to corresponding element in DTD B.'

This is where the actual E/A transformation takes place, and any ambiguities are resolved. In attempting to determine the possible transformation target E/A, the following summarises the possible outcomes:
(a) No target element match, 320. This could occur if E/A from "A" is not conformant to any architecture, or if no E/A from "B" is derived from the architecture(s) from which E/A from "A" is derived. The tool, at 350, can either:
   i) drop the E/A or
   ii) output it to the target document anyway, or
   iii) let the user interactively decide what to do (e.g. user could decide to map it to another E/A).
   The tool can deal with architecture control attribute architecture suppressor (ArcSupr), which suppresses or restores architectural processing for the descendants of an element, as desired.
(b) E/A from "A" directly maps, to one and only one element in "B", see 330. This occurs if there is only one element in "B" that maps to at least one of the architectures from which input E/A is derived. In this case, the tool can perform the mapping automatically, at 360.
(c) E/A from "A" maps to more than one element in "B", as at 340. This can occur if there is more than one element in "B" that maps to the architecture from which input E/A is derived. The mapping may be direct, or indirect, as will be discussed below. Furthermore, there can be multiple inheritances, meaning the E/A from "A" is derived from more than one element, as will be discussed below. In such cases, the tool can do one of the following, see 370:
   i) perform the mapping automatically to the first match it finds;
   ii) perform the mapping automatically based on the base architecture that is "closer" to Doc A in the hierarchy (preferred to the previous item), or
   iii) rely on user input, ( either interactive, or previously stored ) to decide which element to map the current E/A to.

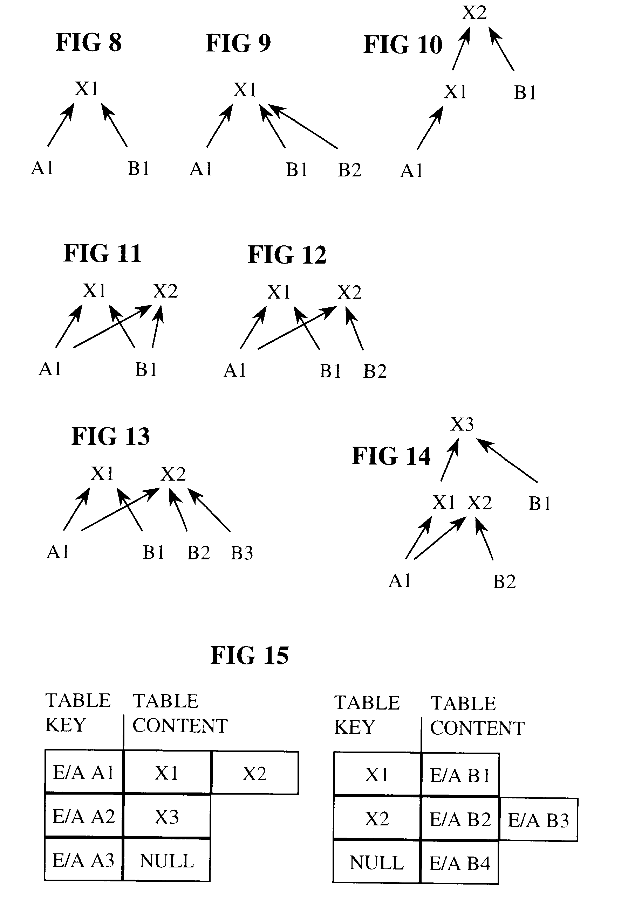

### Figure 8 to 15 - Multiple Inheritances and Indirect Mappings

Figures 8 to 14 show some of the principal possible derivations between elements from Doc A or DTD A, and elements from DTD B. In these figures, A1 to A3 represent elements from DTD A. B1 to B4 represent elements from DTD B, and X1 to X3 represent architectural forms of the various base architectures from which DTDs A and B are derived. Figure 8 shows element A1 is derived from element X1, and element B1 is also derived from X1. There is said to be a unique, and direct mapping. It is direct because A1 and B1 are derived directly from the common base in the architecture, X1.

Figure 9 shows a similar hierarchy, a direct mapping, but not unique, since B2 is also derived from the same base, X1. Thus there is an ambiguity to be resolved, if necessary by user input.

Figure 10 shows an indirect mapping, since A1 is no longer directly derived from the common base, which is X2. The hierarchies of figures 8 to 10 are said to show single inheritance, since there is only one base for element A1.

Figures 11 to 14 show multiple inheritance hierarchies. Having more than one base architecture as the basis for transforming an element, makes for a more complex transformation, as more ambiguities are likely. However, it enables broader use, e.g. across a wider range of departments or organisations. Figure 11 shows a direct, unique, multiple inheritance hierarchy. A1 and B1 have common bases X1 and X2. Figure 12 is similar but includes another ambiguity, since B2 is derived from X2. Figure 13 illustrates the case where a further ambiguity is introduced since B3 is additionally derivable from X2.

Finally, Figure 14 illustrates the case of indirect mapping and multiple inheritance. B1 shares common base X3 with A1, while B2 shares common base X2 with A1. A1 is derived indirectly from X3, via X1.

Figure 15 shows a version of the associative arrays or tables of figure 6. As X1 and X2 are on the same row of the first array, there is a multiple inheritance similar to that represented in figure 13. As B2 and B3 are shown on the same row of the array on the right, there is a multiple mapping, as shown in Figure 13.

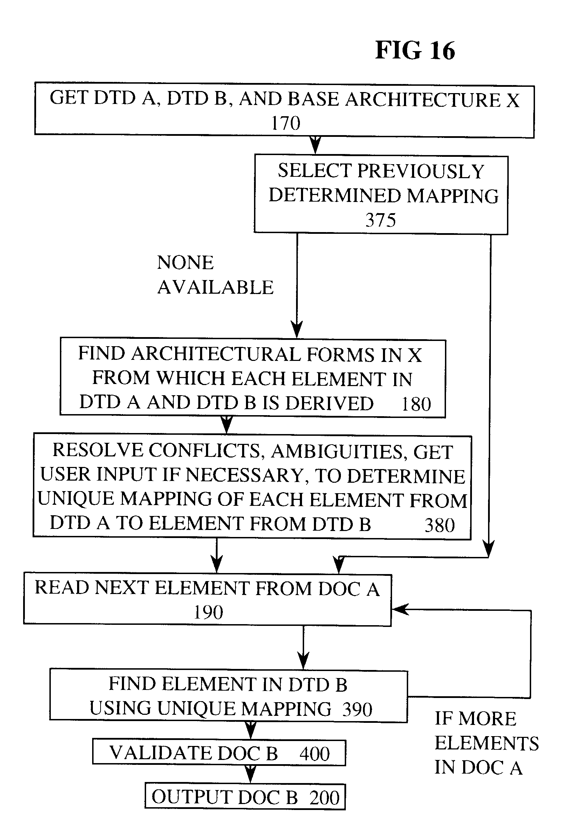

### Figure 16 - Embodiment Having Mapping Table Built in Step a2

Step a1, shown as 170 in figure 16, of getting input DTD (A), output DTD (B), and relevant base architectures (X, Y, Z...), is the same as in the above mentioned embodiments.

### Step a2 - Find all elements/attributes (E/A) in DTD A, and their corresponding architectural forms; find all E/A in DTD B, and their corresponding architectural forms

A new step here involves determining at 375 if there is a stored mapping table determined previously for the same DTDs. If none is available, step 180 involves finding the architectural forms from which each element was derived. Then ,at 380, there is a new step of constructing a mapping table as follows. For all those elements that do not have obvious mappings, a user is presented with a dialog box representing the mapping table. This box will be split into two halves, the left portion showing the elements from DTD A, and the right portion showing possible target elements (arranged in order of mapping preference -- higher element represents better target element). The user selects appropriate mappings by clicking on elements so that input elements are linked to target elements.

### Steps b1 to c1 - Read all docA element/attributes and perform transformation.

This is a more user-friendly version of the initial algorithm. The main difference is that instead of the program interrupting the user everytime it meets an element/attribute that it cannot resolve on its own, now it provides the user with a mapping dialog box before it actually performs the transformation so that the user has to interact only once. Following reading of an element at 190, the mapping table developed at 380 is used at 390 to determine the appropriate element from DTD B.

### Saving Mapping Rules

Once the above algorithm has been executed, a mapping rules file can be saved, so that for all subsequent iterations of transformations from DTD A to DTD B, the program can then load this rules file so that no user-interaction is needed. This means that the level of automation of a generic transformation tool is increased, which will increase the usefulness. Succeeding document transformations can be completely automated if the tool creates a mapping for all elements in DTD A, on its first pass.

### Validation

Validation of Doc B can be performed if desired, as shown at 400, in figure 16, and is preferred because, the transformation tool may not guarantee to produce a valid document. For example the order of elements may be invalid. It is possible that where a base architecture does not constrain the order of particular architectural forms, DTD A and DTD B may define conflicting orders for elements which derive from these forms. The validation could be performed at the end of the transformation, or during the transformation.

If done at the end, it could be carried out by invoking a parser. An advantage of validating during the transformation is that a user can see more readily the causes of the invalidity.

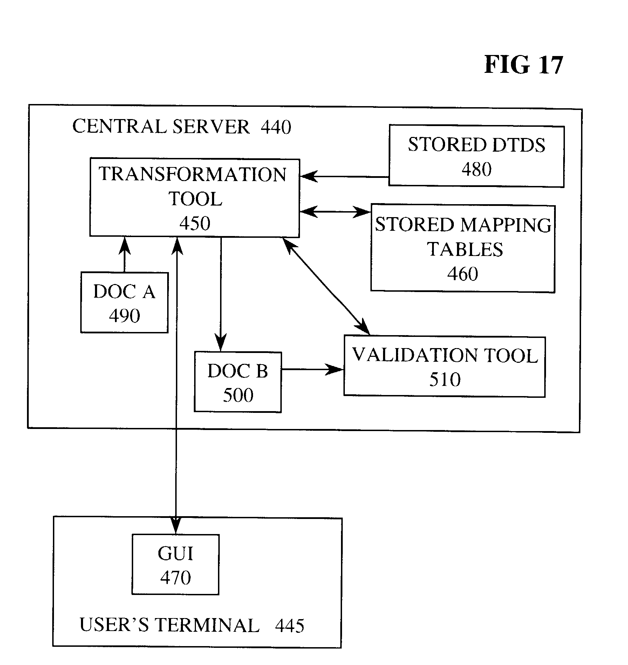

### Figure 17 - Implementation and Hardware Details

As shown schematically in figure 17, the tool 450 could be implemented on a central server 440, available to users terminals, 445, communicating across a network. Inputs would include stored DTDs, 480, stored mapping tables 460 generated during previous transformations, and the starting document, Doc A, 490. Any or all of these could perhaps stored remotely. User input and output might make use of a GUI, (graphical User Interface) 470 running on the users terminal, or elsewhere. The tool could output a mapping table to the store 460, prompts to the GUI, and elements to Doc B. It could initiate a validation of Doc A or Doc B using a validation tool 510.

An implementation of the tool for users of the internet, or intranet, could entail an interface on the user's terminal that includes a java enabled web browser. This would enable better user interaction than would be possible with a web browser alone. In this case, the central server could be a host on the internet.

The tool could be written in almost any high level programming language. Java might be preferred for its platform independence as well as its graphics class libraries. C++ might be convenient for interacting with SP class libraries which are written in C++.

### Other Variations

Although the examples of documents discussed use SGML, other analogous languages could be used if they make available information on the derivation of elements of the DTDs. Although it is preferred that look up tables be used for the element-architectural form associations, and rules be used to resolve cases where there may be more than one target element, in principle, rules or lookup tables could be used for either function.

Although the tool has been described in terms of transforming a complete document, and creating document B from scratch, it is conceivable that the tool could perform transformation of parts of documents. It could also be given a shell of document B, to be supplemented with additional elements.

Optionally, the tool could be limited to creating a mapping at step a2 for only those elements used in Doc A, rather than all the elements in DTD A. In this case, a subsequent document which uses elements not used in Doc A may need further user input to the transformation. An advantage is that user input for the first document is reduced if it does not use all the elements of the DTD. However, more user input may be required for subsequent transformations of other documents.

Although for SGML architectures, it is appropriate to search the first document type definition for a qualifier to an element, indicating an association with a definition of the class of element, other ways of storing and retrieving information on the derivation of elements can be conceived. For example, it may be stored or referenced in some other part of the DTD, such as in an external entity reference.

A further enhancement to this algorithm, one that perhaps makes it more generic and usable by the WWW ( World Wide Web ) community, is to provide an "XML version" of the tool that works as follows:

A simple, generic DTD similar to the HTML DTD but more hierarchical in nature can be provided with the tool for people creating XML documents. Suppose this DTD is called "XML-Base". (An example of the contents of XML-Base is as follows: Section contains Heading followed by Paragraphs followed by other Sections. Paragraphs contain Lists, Tables, other Paragraphs etc.)

Groups A and B, writing according to DTDs A and B respectively, then derive their DTDs from XML-Base. Then, whenever transformations need to be done between these groups, the tool is run as described above using XML-Base as the base architecture. (Again, note that the tool need only run once in interactive mode, and it can re-use mapping rules files subsequent to its initial run.). An advantage of this is that generic transformations can be provided for users of XML. The obvious constraint would be that users of this method would need to be able to derive their DTDs from XML-Base.

In summary, the present invention provides a tool for transforming SGML documents using SGML architectures. It determines to what class of element an element in a first document belongs, from the first document type definition, by searching at least part of the first document type definition for a qualifier to an element, indicating an association with a definition of the class of element. It then determines for that class, at least one corresponding element in the second document type definition, and includes in the second document, an instance of the corresponding element or elements. Interchange of documents becomes easier because a single generic tool can be used for transformation between many different types of documents.

Other variations as well as those discussed above will be apparent to persons of average skill in the art, within the scope of the claims, and are not intended to be excluded.

## Claims

1. A method of transforming a first document marked up according to a first document type definition, into a second document marked up according to a second document type definition, the first document comprising at least one element, and containing a reference to the first document type definition, the method comprising the steps of:
a) determining to what class of element an element in the first document belongs, from the first document type definition;
b) determining for that class, at least one corresponding element in the second document type definition; and
c) including in the second document, an instance of the corresponding element or elements.

2. A method as claimed in claim 1, further comprising the step d) of repeating steps a), b) and c) for all of the elements in the first document.

3. A method as claimed in claim 1 or claim 2, further comprising the step of validating the second document to determine if it conforms to the second document type definition.

4. A method as claimed in any one of claims 1 to 3, wherein step b) further comprises the step of selecting from multiple corresponding elements according to user input.

5. A method as claimed in claim 4, wherein the user input comprises a stored record of a previous selection made by a user in response to a similar choice.

6. A method as claimed in any preceding claim, wherein at least one of the document type definitions is a Standard Generalised Markup Language definition.

7. A method as claimed in any preceding claim, wherein the step of determining to what class of element each of the elements in the first document belongs, comprises searching at least part of the first document type definition for a qualifier to an element, indicating an association with a definition of the class of element.

8. A method as claimed in any preceding claim, wherein the correspondence comprises a single mapping table, relating each of the elements in the first document, to elements in the second document type definition.

9. A method as claimed in any one of claims 1 to 7, wherein the correspondence comprises a pair of mapping tables, a first relating each of the elements in the first document, to one or more classes of element, and a second relating each of the classes to one or more elements in the second document type definition.

10. A method as claimed in any one of claims 1 to 3, wherein step b) further comprises the step of selecting between multiple corresponding elements according to which has a more direct class based correspondence.

11. A method as claimed in any preceding claim, wherein the first and second document type definitions further comprise element qualifiers, the first document further comprises element qualifiers, and the method further comprises the step of determining for each of the qualifiers of the first document a corresponding qualifier from those in the second document type definition.

12. A method as claimed in claim 11, wherein the qualifier comprises an attribute, for describing a property of the element.

13. Apparatus for transforming a first document marked up according to a first document type definition, into a second document marked up according to a second document type definition, the first document comprising at least one element, and containing a reference to the first document type definition, the apparatus comprising:
processing means arranged to determine to what class of element an element in the first document belongs, from the first document type definition;
processing means arranged to determine for that class, at least one corresponding element in the second document type definition; and
processing means arranged to include in the second document, an instance of the corresponding element or elements.

14. A method of populating a transformation table for transforming elements of a first document marked up according to a first document type definition, into elements of a second document type definition, the first document comprising at least one element, and containing a reference to the first document type definition, the method comprising the steps of:
determining to what class of element an element in the first document belongs from the first document type definition;
determining for that class, at least one corresponding element in the second document type definition; and
populating the table with the corresponding element or elements.

15. A method of using transformation tables for transforming an element of a first document marked up according to a first document type definition, into an element of a second document marked up according to a second document type definition, the tables comprising correspondences between elements in more than two document type definitions, the method comprising the steps of:
selecting a table having a correspondence between the elements in the first document and elements in the second document type definition; and
using an element of the first document to access an entry in the selected table to perform the transformation.
